# EUROPEAN PATENT SPECIFICATION

(11) **EP 3 508 354 B1**
(45) Date of publication and mention of the grant of the patent: **07.04.2021**
(21) Application number: 18150853.2
(22) Date of filing: 09.01.2018
(51) Int. Cl.: B60C 11/00, B60C 11/03

(54) **TIRE TREAD AND PNEUMATIC TIRE**
REIFENLAUFFLÄCHE UND LUFTREIFEN
BANDE DE ROULEMENT ET PNEUMATIQUE

(43) Date of publication of application: 10.07.2019
(73) Proprietor: Nexen Tire Europe s.r.o., 65929 Frankfurt am Main (DE)
(72) Inventor: Schlüfter, Matthias, 65439 Flörsheim am Main (DE); Steiner, Uwe, 63796 Kahl am Main (DE); Knispel, Oliver, 63571 Gelnhausen (DE); Wildgrube, Axel, 64832 Babenhausen (DE); Hölzel, Michael, 64572 Büttelborn (DE); Matz, Lothar, Hanau 63452 (DE)
(74) Representative: Tergau & Walkenhorst Patentanwälte PartGmbB

(56) References cited:
- EP-A1- 2 052 880
- EP-A1- 2 457 742
- EP-A2- 0 106 838
- EP-A2- 1 745 946
- WO-A1-01/39998
- WO-A1-2015/090983
- JP-A- H0 495 508
- JP-A- S58 211 902
- JP-A- 2008 024 045
- US-A1- 2014 150 944

## Description

### Field of the invention

The invention relates to a tire tread. It also relates to a pneumatic tire comprising such a tire tread.

### Background of the invention

As a tire wears, the volume of the tread decreases due to frictional contact with the road surface and the volume of the grooves of the tread decreases. When the groove volume decreases, the tire's ability to channel water away from the tire footprint is reduced; this in consequence reduces the wet road tire performance. It is therefore desirable to have a tire which shows only little wear.

Another demand on modern tires is a high grip to the road. A tire tread with a high grip level reduces its lifetime due to larger wear and tear. In other words, the disadvantage of high grip tires is the increased wear. If the grip level is increased, the wear also increases. Accordingly, there is a conflict between the two demands of high grip level and high wear resistance. With respect to the design of the compound, by enabling a good wet grip, the compound is built of materials which are strongly subject to wear.

The tire tread therefore is subject to several trade-offs that have to be made to meet various requirements which in turn demand conflicting properties of the rubber compound.

The EP 2 695 749 B1 discloses a tire tread made from multi cap compounds, whereby an inner layer in certain regions of the tread reaches radially outwardly into an outer layer.

The document US 2014/150944 A1 discloses a tire tread with a tread layer extending continuously between two shoulder blocks.

An aim of the current invention is to provide a tire tread with improved distribution of stiffness, wear resistance, rolling resistance, and grip.

A further aim is to provide a pneumatic tire with such a tire tread.

### Summary of the invention

The invention relates to a tire tread in accordance with claim 1 and to a pneumatic tire in accordance with claim 11.

Dependent claims refer to preferred embodiments of the invention.

The invention is based on the consideration that modern demands on pneumatic tires for vehicles include at the same time strong grip, wear resistance and handling, thereby increasing traction and therefore safety and high wear resistance, which results in a prolonged lifetime of the tire tread and of the whole tire. Since these requirements demand different kinds of optimized compound materials, there is usually a tradeoff in the tread design that has to be made.

Applicant has found that these demands can simultaneously be met by providing a tire tread with a first outer layer which provides a contact surface for the tread in the shoulder blocks and extends continuously between the shoulder blocks. In this way, the compound in the shoulders can be optimized to provide stiffness and it also contributes to the stiffness of the tread between the shoulder blocks since the shoulder blocks are connected by the part of the layer between them. The blocks or ribs between these two shoulder blocks can be built with layers made of rubber compounds which are optimized for their specific role such as grip, especially wet and/or snow grip, rolling resistance, and wear resistance.

By the tread design according to the invention, the inner shoulder block by its connection to the outer shoulder block, the inner shoulder block contributes to the force distribution when the outer shoulder block experiences force and/or torque. The continuous connection between the shoulder blocks allows fine-tuning the desired stiffness properties of the tire tread and at the same time allows optimizing the force distribution in the tread.

"Groove" denotes an elongated void area in a tread which may extend at least partially circumferentially or laterally about the tread in a straight, curved, or zigzag manner. Circumferentially and laterally extending grooves sometimes have common portions and maybe be classified as "wide" or "narrow". A "narrow groove" has preferably a width greater than a snipe but less than or equal to about 4.0 mm. A "wide groove" has preferably a width greater than about 4.0 mm.

"Block" means an at least partially circumferentially extending strip of rubber of the tread which is defined by at least one circumferential groove and either a second circumferential groove or a lateral edge, wherein the strip is not divided by full depth grooves. A block can comprise a rib or a shoulder block of the tire tread. "Shoulder block" means a tread part which is located at a respective tread border and which at least partially provides a contact surface to the road. A shoulder block preferably is made of a rubber compound which is optimized for wear resistance/handling. A shoulder block preferably has a width less than 33% of the total width of the tread. Shoulder blocks can but don't have to be separated from ribs or other parts of the tread by grooves. According to the invention, the shoulder blocks and the first layer connecting the shoulder blocks are made of the same material.

"Radial" and "radially" are used to indicate directions radially toward or away from the symmetry axis of the tread, which corresponds to the rotation axis of a mounted tire with such a tread.

"Radially inner" layer means that when looking in a radial direction from the symmetry axis of the tread, this layer is more close to the axis than a "radially outer layer". Symmetry axis means that the overall tire tread is essentially rotationally symmetric around this axis while the detailed structure of ribs and blocks needs not be symmetric with respect to this axis.

"Contact surface" means the surface with which the tire tread under normal conditions gets into contact with the road. It is therefore at least locally a radially outermost part of the tread.

The term that the "layer extends continuously between the shoulder blocks" includes spatial disconnections by at least one chimney and/or tread wear indicator which typically are made of a compound which is more stiff than the first layer. One disconnection is preferably smaller than 3 mm. Preferably, the summed width of all disconnecting regions is smaller than 3% of the total tire tread.

The term "reaching through" of a first layer through a second layer means that the first layer radially locally extends further than the second layer and extends up to the surface of the tread. The term "reaching outwards into" of a first layer into a second layer means that locally the first layer extends radially further than the second layer, without necessarily reaching the tread surface.

The expression that the inner layer reaches through the outer layer or layers includes the case where on two sides of the through-reaching region of the inner layer, the outer layer is arranged, i.e. the inner layer is surrounded on two sides by the outer layer. It also includes preferably the case where the inner layer is adjacent to the outer layer or layers only on one side.

Advantageously between the shoulder blocks the outer contact surface is provided only by the second layer.

Preferably at least one block/rib is arranged between the shoulder blocks in which at least partially the outer contact surface is provided by the first layer.

Preferably exactly one rib/block with an outer block layer is arranged between the two shoulder blocks, whereby the rubber compound of the block layer is different from the rubber compound of the first layer.

Preferably a plurality of ribs/blocks is arranged between the shoulder blocks, whereby each block comprises an outer block layer.

The outer block layers preferably are built of at least two different compounds.

Advantageously, the compounds of the outer layers of these blocks are pairwise different.

Preferably at least one rib/block with two layers arranged in radial direction is provided.

Between the two shoulder blocks, preferably at least one region is provided in which the first layer provides a contact surface.

Advantageously, at least one rib/block is arranged between the two shoulder blocks which is built of the first layer.

Preferably, a base layer is provided which constitutes the radially most inner layer of the tread.

According to the invention, between the first layer and the base layer, a further layer is arranged. This intermediate layer according to the invention is made of a material which comprises a stiffness which lies in between the stiffness of the base layer and the stiffness of the first layer.

The second layer in its region between the two shoulder blocks preferably comprises a profile with at least one gradient.

In a preferred embodiment the tire tread comprises no circumferential groove.

The tread can comprise one or more outer layers. Each of the outer layers is built of an outer tread compound. In one preferred embodiment, the tread comprises exactly one outer layer, of which the compound and its design are preferably optimized for grip. In a second preferred embodiment, two outer layers are provided, whereby each outer layer is built of a different compound.

The outer tread compound is preferably a rubber compound. In case that more than outer layer is provided, each of the outer layers preferably comprises a different tread compound. The inner tread compound is preferably a rubber compound.

Preferably, the pneumatic tire comprises a tire tread as described above, whereby the tire comprises two sidewalls arranged, respectively, adjacent to the tire tread, and whereby the edge tread compound is essentially identical to the compound of which the respective sidewall is made. In other words, the respective edge part and the sidewalls are preferably made of the same rubber compound. In this way, the edge part serves especially well to support the attachment or connection between tire tread and respective side wall of the tire.

The advantages of the invention are especially as follows. The continuous connection of the shoulder blocks allows realizing an optimized force distribution and therefore enhances the lifetime of the tread. Additionally, tread parts between the shoulder blocks and comprise other rubber compounds which can be optimized for grip. A versatile pneumatic tire is realized which can be adopted to a broad range of desired properties. By the layer connecting the shoulder blocks, module jumps between a base layer and the outer layers can be reduced, leading to a prolonged lifetime of the tire tread, less abrasion/wear, less rolling resistance and more comfort, better handling. This design allows optimizing one criterion or several criteria without a large tradeoff with respect to the other criteria.

### Brief description of the drawings

Further features and advantages of the present invention shall become clearer from the following detailed description of some of its preferred embodiments, made with reference to the attached schematic drawings and given as an indication and not for limiting purposes.

In particular, the attached drawings are included to provide a further understanding of the invention and are incorporated in and constitute a part of this specification. The drawings together with the description explain the principles of the invention. In the drawings, corresponding characteristics and/or components are identified by the same reference numbers. In these drawings:
- FIG. 1: shows a cross-sectional view of a tire tread for a pneumatic tire;
- FIG. 2: shows a cross-sectional view of a tire tread for a pneumatic tire;
- FIG. 3: shows a cross-sectional view of a tire tread for a pneumatic tire;
- FIG. 4: shows a cross-sectional view of a tire tread for a pneumatic tire;
- FIG. 5: shows a cross-sectional view of a tire tread for a pneumatic tire;
- FIG. 6: shows a cross-sectional view of a tire tread for a pneumatic tire;
- FIG. 7: shows a cross-sectional view of a tire tread for a pneumatic tire;
- FIG. 8: shows a cross-sectional view of a tire tread for a pneumatic tire;
- FIG. 9: shows a cross-sectional view of a tire tread for a pneumatic tire;
- FIG. 10: shows a cross-sectional view of a tire tread for a pneumatic tire;
- FIG. 11: shows a cross-sectional view of a tire tread for a pneumatic tire;
- FIG. 12: shows a cross-sectional view of a tire tread for a pneumatic tire;
- FIG. 13: shows a cross-sectional view of a tire tread for a pneumatic tire; and
- FIG. 14: shows a cross-sectional view of a tire tread for a pneumatic tire in a preferred embodiment of the invention.

### Detailed description of the invention

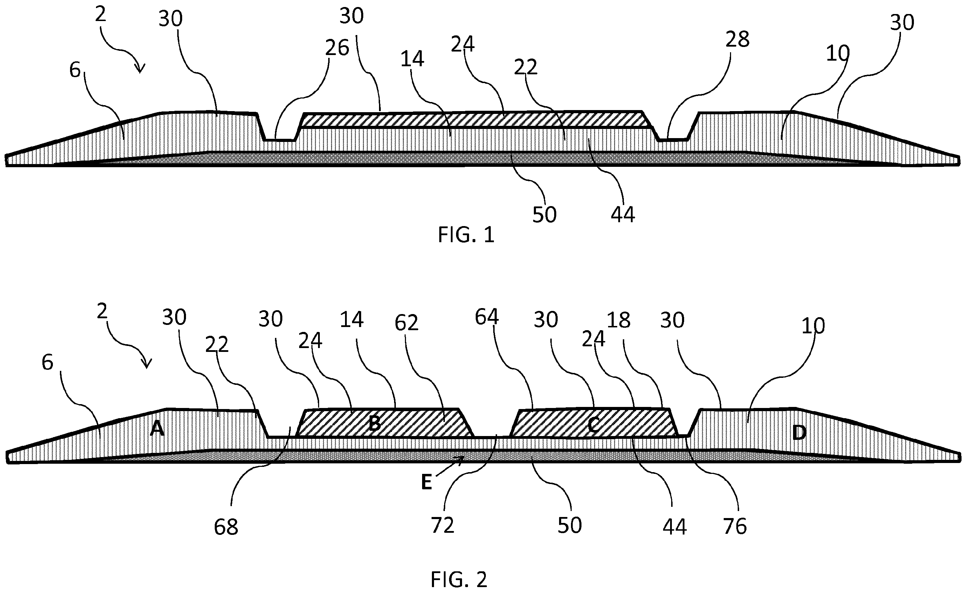

A cross-sectional view of a tire tread 2 for a pneumatic tire is shown in FIG. 1. The corresponding pneumatic tire may be formed of typical tire components known to those skilled in the art, such as, but not limited to, inner liner (not shown), annular beads (not shown), sidewall (not shown), apex (not shown), plies (not shown), possible edge compound (not shown) and belt package (not shown). The tire tread 2 comprises a first shoulder block 6 and a second shoulder block 10. The shoulder blocks 6, 10 form the respective shoulder regions of the tire. The tire tread 2 comprises a central rib 14. The tire tread 2 in other preferred embodiments can comprise two ribs, four ribs or more ribs.

The tire tread 2 instead of one or several ribs can alternatively comprise tread blocks, preferably circumferentially aligned tread blocks. Rib 14 is separated from shoulder blocks 6, 10 by grooves 26, 28, respectively. The grooves 26, 28 respectively have a defined depth and preferably comprise inclined pairs of sidewalls. The grooves 26, 28, respectively, preferably comprise a flat bottom part.

The tire tread 2 comprises a first tread layer 22, whereby this tread layer 22 is made of a first or outer rubber compound. The rubber compound material is optimized for dry handling and large wear resistance. The first layer 22 in each shoulder block 6, 10 at least partially provides an outer contact surface 30 (only labelled exemplarily in the figures). The first layer 22 extends continuously between the two shoulder blocks 6, 10, i.e. it extends from shoulder block 6 to should block 10, in an intermediate part 44. Shoulder blocks 6, 10 and intermediate part 44 are built in a one-piece or integral design. Shoulder blocks 6, 10 also, respectively, provide a contact surface 30. A contact surface 30 is the surface with which the tread 2 gets into contact with the road during regular driving operations.

Tire tread 2 comprises a second layer 24 which is provided in central rib 14 and provides the outer contact surface 30 in central rib 14. Along the entire width of rib 14, second layer 24 is the radially more outer layer compared to first layer 22. Second layer 24 is made of a second rubber compound. This compound is optimized to provide strong wet/snow grip.

Tire tread 2 further comprises a third layer 50 which is a base layer of tire tread 2 and which is the radially most inner layer. Third layer 50 is made of a third rubber compound. The base layer is the radially innermost layer and has a profile with essentially a constant depth in a central region of tire tread 2 which is reducing its depth in the shoulder or wing regions of tire tread 2. Its main function is to provide a desired stiffness or rigidity to the tire tread 2. The configuration shown in FIG. 1 corresponds to the unworn state of tire tread 2. In FIG. 1 and the following figures, the left part of the figure preferably corresponds to the inner side of the tread 2 while the right side preferably corresponds to the outer side of the tread, which relates to the arrangement when the tire is mounted to a vehicle. The tire tread 2 shown in FIG. 1 is for example suitable for a winter tire for a sporty SUV.

All tire treads 2 shown in FIGs 1-14 respectively comprise two shoulder blocks 6, 10 and a base layer 50. Although in none of the preferred embodiments shown a tread wear indicator and/or chimney is explictely shown, such a tread wear indicator and/or chimney may be present and may interrupt the layer 22 connecting shoulder blocks 6, 10. The term that the "layer extends continuously between the shoulder blocks" therefore includes spatial disconnections, especially of intermediate part 44, by at least one chimney and/or tread wear indicator which typically are made of a compound which is more stiff than the first layer.

A further tire tread 2 is shown in FIG. 2. The tire tread 2 comprises two ribs 62, 64 arranged between shoulder blocks 6, 10. Tire read 2 comprises three grooves 68, 72, 76 arranged between adjacent ribs 62, 64 or ribs 62, 64 and adjacent shoulder blocks 6, 10. Other tire treads 2 can comprise three or more ribs. Shoulder blocks 6, 10 and intermediate part 44 are made of a first 22 as in FIG. 1. In all embodiments shown, shoulder blocks 6, 10 and intermediate part 44 are present. The presence of the intermediate part 44 which connects shoulder blocks 6, 10 contributes to the stiffness of the tread. The material connection of (inner) shoulder block 6 with (outer) shoulder block 10 serves to involve inner shoulder block 6 during handling and makes inner shoulder block 6 a more active part compared to the case without this connecting/intermediate part 44 between the two shoulder blocks.

In each rib 62, 64, a second layer 24 made of a second compound is arranged which provides the contact surface 30 in each rib. The tread 2 of FIG. 2 is especially suited for a summer tire. The outer parts with shoulder blocks 6, 10 are again optimized for handling/wear resistance while the second compound in ribs 62, 64 is optimized for wet grip.

The thickness of intermediate part 44 contributes to the overall stiffness of tread 2. In the preferred embodiment shown, the intermediate part 44 has a thickness of less than half of the thickness of shoulder blocks 6, 10 while in the preferred embodiment shown in FIG. 1, the thickness is more than half. In all embodiments shown in the figures, the thickness of intermediate part 44 can be chosen depending on the desired stiffness of tread 2, which can also depend on the thickness of a base layer or third layer 50. Preferably, the thickness of intermediate part 44 is more than half of the thickness of shoulder blocks 6, 10 or one third or less of the thickness of shoulder blocks 6, 10.

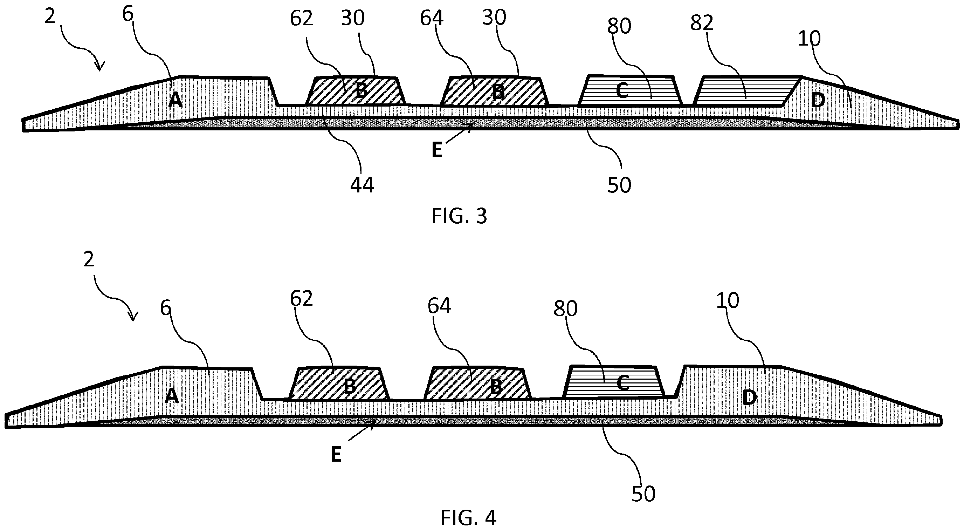

A further tire tread 2 is shown in FIG. 3. This embodiment comprises two ribs 62, 64 made of the second rubber compound and a third rib 80 made of a third compound. It further comprises a fourth lateral block 82 which is directly adjacent to shoulder block 10. Also the fourth lateral block 82 is made of the third compound. The tire tread 2 is especially suited for a summer tire, whereby the second compound which provides the contact surface 30 in ribs 62, 64 is optimized for wet grip. As before, the first compound of shoulder blocks 6, 10 and intermediate part 44 is optimized for handling/wear resistance. The third compound is a compound different from the first and second compounds and acts as an intermediate compound yielding a compromise between optimizations with respect to handling and grip. The outer shoulder block 10 is preferably smaller in width than the inner shoulder block 6 due to the adjacent block 82.

A further tire tread 2 is shown in FIG. 4. The difference between this tire tread 2 and the tire tread 2 according to FIG. 3 is the absence of the lateral block 82. Since the width of the shoulder block 10 is not reduced by a lateral block, the tread 2 can provide better wear resistance and handling compared to the tread of FIG. 3 and therefore is suitable for vehicles with stronger engines while the tread 2 according to FIG. 3 is more optimized with respect to grip.

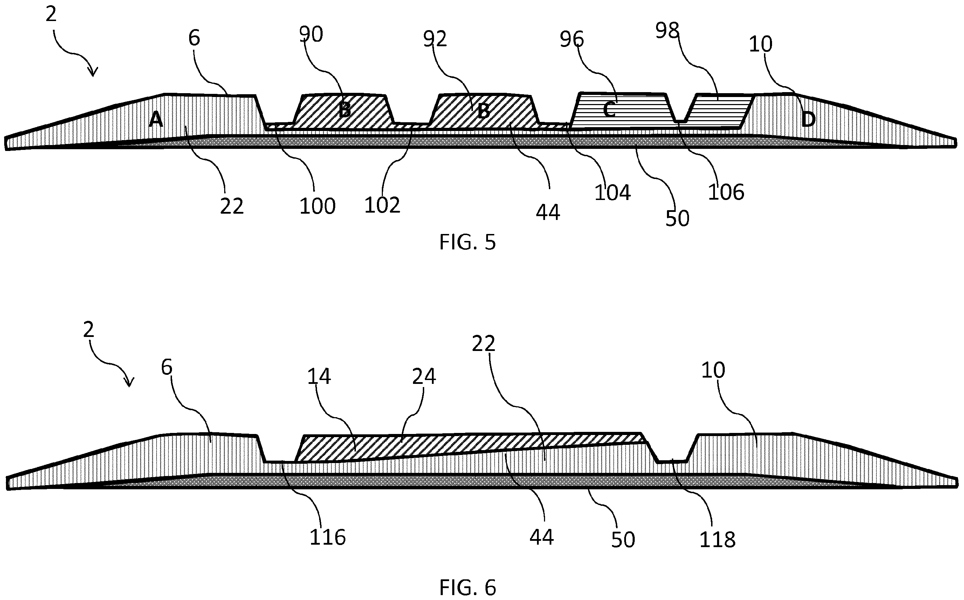

A further tire tread 2 is shown in FIG. 5. The tread 2 comprises two ribs 90, 92 made of a second rubber compound as well as a third rib 96 and a lateral block 98 made of a third rubber compound. The second compound is preferably optimized for grip while the third compound is an intermediate compound between second compound and first compound of shoulder blocks 6, 10 and intermediate part 44. Tire tread 2 comprises four grooves 100, 102, 104, 106. In each groove 100-106, the first layer 22 is arranged radially inside second or third layer. In grooves 100, 102, 104, the second compound is arranged radially outside first layer. In groove 106, the third compound is arranged radially outside first layer. In this way, while an overall thickness of tread 2 can be realized, the intermediate part 44 can be built as a thin connecting layer. Preferably, thickness of intermediate part 44 is less than one quarter of thickness of shoulder blocks 6, 10. This tread 2 due to its reduced thickness of intermediate part 44 is softer than previously shown preferred embodiments and optimized for driving comfort. The thinner connection between shoulder blocks 6, 10 leads to a reduced stiffness and force distribution among shoulder blocks 6, 10.

A further tire tread 2 is shown in FIG. 6. Tire tread 2 has a centrally arranged rib 14 in which a second layer 24 provides the contact surface. The thickness of first layer 22 in rib 14 is increasing from left to right, therefore preferably from the tire tread inside to the outside. Since thickness of rib 14 is essentially staying constant, accordingly the thickness of second layer 24 is decreasing from the left side to the right side. This means that adjacent to a groove 118 arranged more outside than a groove 116, the first layer 22 is more thick than the second layer, while the opposite is true adjacent to groove 116. In this way, the outer groove 118 is stronger supported than the inner groove 116 and has more stiffness.

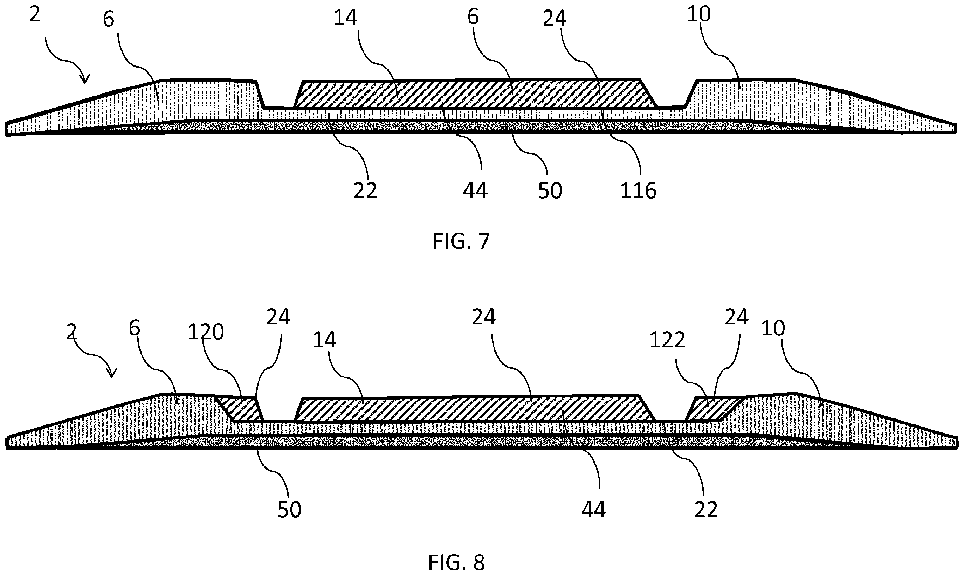

A further tire tread 2 is shown in FIG. 7. The tread 2 differs from tread 2 of FIG.1 by the smaller thickness of intermediate part 44. This choice results in a less stiff tire tread 2 and a less stiff connection between shoulder blocks 6, 10.

A further tire tread 2 is shown in FIG. 8. The tire tread 2 comprises a central rib 14 and two lateral blocks 120, 122. Rib 14 and blocks 120, 122 comprise the second layer 24 with a second compound material, therefore preferably the compound material of rib 14 and blocks 120, 122 is the same material. The second compound is preferably optimized for wet/snow grip. In order to enhance this grip, the shoulder blocks 6, 10 are reduced in width such that blocks 120, 122 are arranged adjacent and can provide also wet/snow grip in a shoulder region of the tire tread 2.

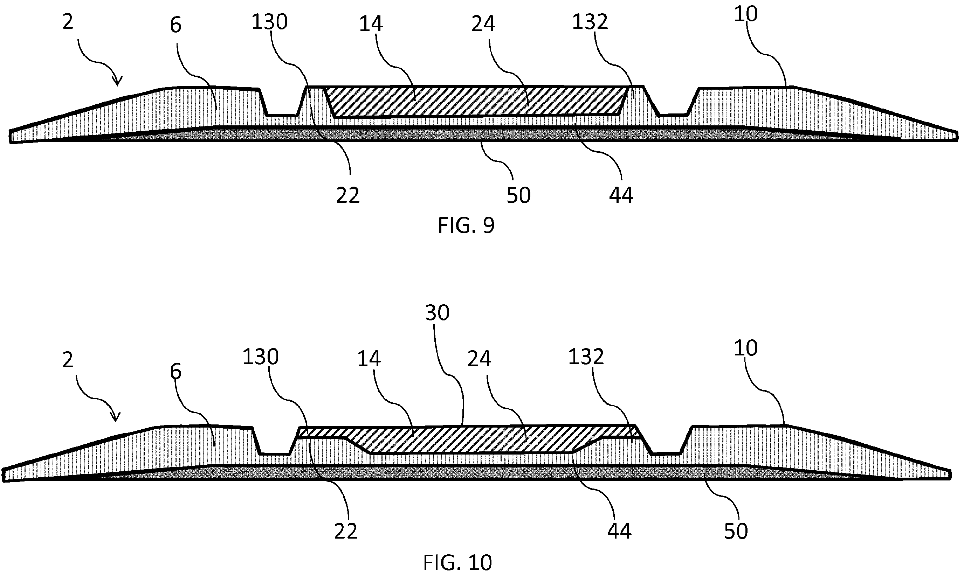

A further tire tread 2 is shown in FIG. 9. In central rib 14, two border regions 130, 132 are formed which are made of the first compound 22. In these border regions 130, 132, the first layer 22 provides the contact surface. Tire tread 2 therefore, in addition to shoulder blocks 6, 10, provides in rib 14 further road contact of first layer 22. Since the corresponding compound material is made of the first compound which is optimized for handling and wear resistance, this tread 2 yields improved handling properties at the trade-off of reduced wet grip of layer 24 in rib 14.

A further tire tread 2 is shown in FIG. 10. This tread 2 differs from tread 2 of FIG. 9 in that in the border regions 130, 132 of rib 14, the first layer 22 thickens compared to the region of intermediate part 44 between these regions 130, 132 but does not provide the contact surface. Instead, in border regions 130, 132 the second layer provides the contact surface in rib 14. In this way, the stiffness of rib 14 at its border is achieved as in the tread according to FIG. 9, thereby improving handling. But the contact surface of second layer of providing wet/snow grip is not reduced.

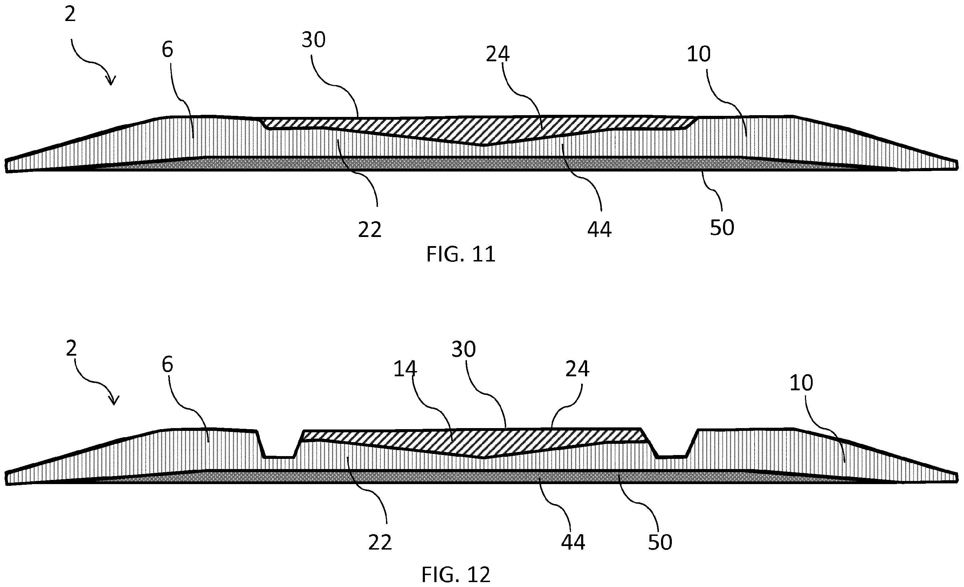

A further tire tread 2 is shown in FIG. 11. The tire tread 2 comprises no circumferential groove. It may contain, however, patterns, i.e. regions of the tire tread 2 in which layers 22, 24 are reduced in thickness locally to provide a tread profile. The intermediate part 44 between shoulder blocks 44 has not a constant thickness but has a symmetric profile in which its thickness is lowest in the middle between shoulder blocks 6, 10 and increases towards the respective shoulder blocks 6, 10. In other preferred embodiments, the intermediate part can have a more constant or constant thickness at least partially between shoulder blocks. In all variations, the tire tread 2 may have no grooves, patterns, or no structure at all (slick).

A further tire tread 2 is shown in FIG. 12. This tire tread 2 with a central rib 14 differs from the tire tread 2 shown in FIG. 1 that the connection between shoulder blocks 6, 10 by intermediate part 44 has not a horizontal connection line, i.e. has essentially the same thickness, but comprises an extended V-type profile. Therefore, in the middle of rib 14, the layer 24 has a maximum thickness while layer 22 has a minimum thickness with respect to rib 14.

In all embodiments shown, the connection between first layer 22 and a second layer 24 or further layers can have alternative geometries, for instance a wave-like profile or a zig-zag profile. These connections are advantageous for increasing the connection/attachment between these layers.

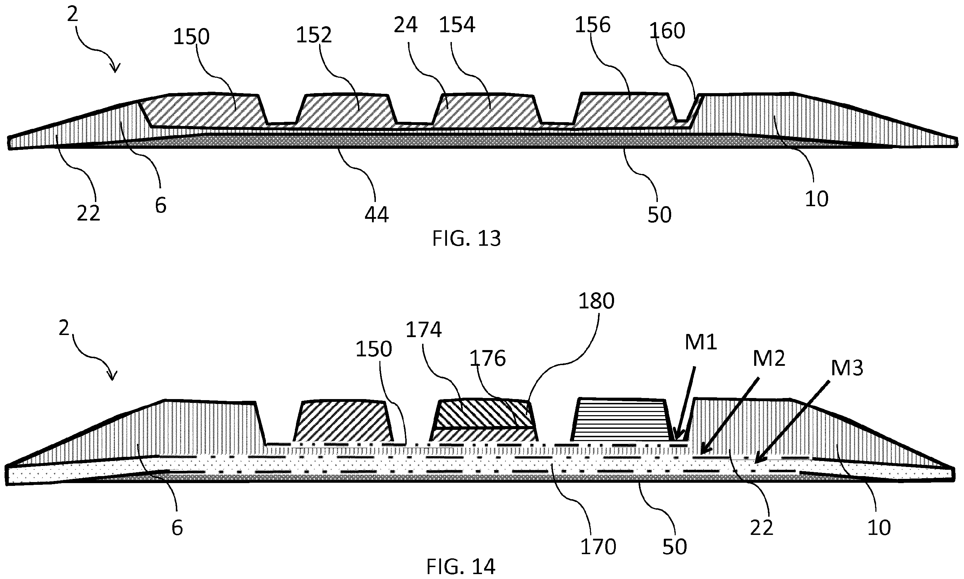

A further tire tread 2 is shown in FIG. 13. Tire tread 2 comprises a think intermediate part 44 and therefore provides reduced stiffness. It comprises a lateral block 150 adjacent to shoulder block 6 and three ribs 152, 154, 156 separated by grooves as well as a further region 160 adjacent to shoulder block 10. The tire tread 2 yields a very soft tire optimized for wet/snow grip. Since the intermediate part 22 is very thin, the force distribution among the two shoulder blocks 6, 10 is less pronounced.

A preferred embodiment of a tire tread 2 according to the invention is shown in FIG. 14. This tire tread has a base or third layer 50 and a further layer 170 arranged between first layer 22 and base layer 50. Preferably layer 170 is less stiff than layer 50. By providing a further layer 170, the modules between the various layers can be designed to have reduced jumps in order to optimize the dynamical stiffness properties of tire tread 2. A rib 180 comprises a radially outermost layer 174 and a radially more inner layer 176. In all preferred embodiments shown, the ribs shown can comprise two or more layers.

At least two, i.e. two, three or more, compounds are arranged in the tread. The compound of the first outer layer which is located at the shoulder blocks 6, 10 extends from one shoulder block 6 to the other 10 and thereby connects these shoulder blocks 6, 10. Between shoulder blocks 6, 10 and radially more outwards, at least one block/rib with a different compound is arranged.

The connection of shoulder blocks 6, 10 by the first outer layer is supported by a further radially inner tread layer 170 (or 170 and 50), which is preferably made of a different compound. This radially most inner layer is continuous across the tread and together with the first outer layer further improves the stiffness characteristics of the tread. This layer most preferably, also in the worn state, does not reach out the tread surface/contact surface. In this way, it can be optimized for the demanded properties. Since it is not exposed to the sun at the tread surface, it can contain fewer portions of ingredients such as UV-protection.

Referring to FIG. 14, by providing a two-fold connection of shoulders 6, 10 via the first layer and the additional layer 170, the vertical module jumps M1, M2 (and possibly M3) of the respective zones/compounds can be set/graded differently in order to optimize the dynamical stiffness progression E* in the tire tread. In a preferred embodiment, the tread can comprise wings.

The described design allows employing various and different compounds in different regions of the tread. Goal conflicts which result from the demands on physical properties of various zones in the tire tread can be reduced by arrangement of tread layers with corresponding compounds in both horizontal and vertical directions. A harmonic distribution of stiffness and grip can be achieved across the entire tread.

The following tables show advantageous combinations of various rubber compounds for a tire tread according to the invention. The first column denotes a further optimization criterion. The following columns denote tire zones, whereby zones A and D correspond to the shoulder blocks, zones B and C correspond to ribs/blocks and zone E corresponds to the base layer.

The last table indicates the compounds which are optimized for the various product categories. Each number labels a certain rubber compound. The letters A-E label shoulder blocks (A, D), a base layer (E), and ribs or blocks (B, C) between the shoulder blocks. A preferred example of a corresponding tire tread is shown in FIG. 2.These tables can also be applied to tire treads with only one rib; in this case, letters B and C denote one rib, of which the compound can be the one specified, one of the two specified or a combination of the two compounds. They can also be applied to tire treads with three ribs as for example shown in FIGs. 3 or 4.
1. Winter-tire with two compounds which is optimized for wet/snow grip.

| | A | B | C | D | E |
|---|---|---|---|---|---|
| dry | 2 | 1 | 1 | 2 | 52 |
| snow | 1 | 5 | 5 | 1 | 53 |
| wear | 4 | 1 | 1 | 4 | 52 |
| rrc | 3 | 1 | 1 | 3 | 51 |

2. High-performance summer-tire with two compounds which is optimized for wet grip.

| | A | B | C | D | E |
|---|---|---|---|---|---|
| dry | 22 | 21 | 21 | 22 | 52 |
| wear | 24 | 21 | 21 | 24 | 52 |
| rrc | 23 | 21 | 21 | 23 | 51 |

3. Winter tire with three compounds which is optimized for wet/snow grip as well as rolling resistance.

| | A | B | C | D | E |
|---|---|---|---|---|---|
| dry | 2 | 1 | 3 | 2 | 52 |
| snow | 5 | 3 | 1 | 5 | 53 |
| wear | 4 | 1 | 3 | 4 | 52 |
| rrc | 3 | 3 | 1 | 3 | 51 |

4. Summer tire with three compounds which is optimized for wet grip as well as rolling resistance.

| | A | B | C | D | E |
|---|---|---|---|---|---|
| dry | 22 | 21 | 23 | 22 | 52 |
| wear | 24 | 23 | 21 | 24 | 52 |
| rrc | 23 | 21 | 23 | 23 | 51 |

The following table displays preferred values for the compounds of the fourth table labelled above.

| | Cap | Cap | Cap | Cap | TC/Base | TC/Base |
|---|---|---|---|---|---|---|
| | 21WET | 22DRY | 23RC | 24WEAR | 51RRC | 52DRY |
| Shore A | 60-72 | 60-72 | 60-72 | 60-75 | 60-75 | 60-75 |
| Rebound 23°C | 15-30 | 15-30 | 15-40 | 15-40 | 15-50 | 15-50 |
| Rebound 100°C | 45-65 | 45-65 | 45-75 | 45-75 | 40-70 | 40-60 |
| Modul 300% | 7-13 | 8-13 | 8-13 | 10-14 | 8-14 | 8-14 |
| Tan delta 60°C | 0.090-0.160 | 0.090-0.150 | 0.080-0.120 | 0.070-0.100 | 0.040-0.100 | 0.060-0.100 |

The following table further specifies the optimization of the respective compound with respect to a product category:

| Winter | | All-Season | | Summer HP | | Summer UHP | | Base | |
|---|---|---|---|---|---|---|---|---|---|
| A-D | | | | | | | | E | |
| 1 | wet | 11 | wet | 21 | wet | 31 | wet | 51 | rrc |
| 2 | dry | 12 | dry | 22 | dry | 32 | dry | 52 | stiff |
| 3 | rrc | 13 | rrc | 23 | rrc | 33 | rrc | 53 | soft |
| 4 | wear | 14 | wear | 24 | wear | 34 | wear | | |
| 5 | snow | 15 | snow | | | | | | |

A wet compound is optimized for wet handling and braking on wet ground. An rrc (rolling resistance compound) is optimized with respect to the rolling resistance. HP denotes "high performance" a UHP denotes "ultra-high performance".

## Claims

1. Tire tread (2) comprising two shoulder blocks (6, 10), further comprising a first layer (22) and further comprising at least one second layer (24), whereby said first layer (22) at least partially in both shoulder blocks (6, 10) provides an outer contact surface (30), and whereby said first layer (22) extends continuously between said two shoulder blocks (6, 10), and whereby said at least one second layer (24) between said two shoulder blocks (6, 10) at least partially provides said outer contact surface (30), whereby the rubber compound of the first layer (22) is different from the rubber compound of the second layer (24),
wherein a base layer (50) is provided which constitutes the radially most inner layer of said tread (2), **characterized in that** between said first layer (22) and said base layer (50) a further layer (170) is arranged, whereby said further layer (170) is made of a material which comprises a stiffness which lies in between the stiffness of the base layer (50) and the stiffness of the first layer (22), and whereby said further layer (170) is continuous across the tread (2) and, also in the worn state, does not reach out to the outer contact surface (30).

2. Tire tread (2) according to claim 1, whereby between said shoulder blocks (6, 10), said outer contact surface (30) is provided only by said second layer (24).

3. Tire tread (2) according to claim 1, comprising at least one block or rib (14) arranged between said shoulder blocks (6, 10) in which at least partially said outer contact surface (30) is provided by said first layer (22).

4. Tire tread (2) according to one of the claims 1 to 3, comprising exactly one rib or block (14) with the second layer (24) arranged between said two shoulder blocks (6, 10).

5. Tire tread (2) according to one of the claims 1 to 3, whereby a plurality of ribs or blocks (62, 64) is arranged between said shoulder blocks (6, 10), whereby each block (62, 64) comprises the second layer (24).

6. Tire tread (2) according to one of previous claims, comprising at least one rib or block (180) with two layers (174, 176) arranged in radial direction.

7. Tire tread (2) according to one of the previous claims, whereby between said two shoulder blocks (6, 10), at least one region (130, 132) is provided in which said first layer (22) provides a contact surface (30).

8. Tire tread (2) according to claim 7, whereby at least one rib or block arranged between said two shoulder blocks (6, 10) is built of said first layer (22).

9. Tire tread (2) according to one of the previous claims, whereby said second layer (24) in its region between said two shoulder blocks (6, 10) comprises a thickness profile with at least one gradient.

10. Tire tread (2) according to one of the previous claims, comprising no circumferential groove.

11. Pneumatic tire with a tire tread (2) according to one of the previous claims.

## Patentansprüche

1. Reifenlauffläche (2), die zwei Schulterblöcke (6, 10) umfasst, ferner eine erste Schicht (22) umfasst und ferner mindestens eine zweite Schicht (24) umfasst, wobei die erste Schicht (22) zumindest teilweise in beiden Schulterblöcken (6, 10) eine äußere Kontaktfläche (30) bereitstellt, und wobei sich die erste Schicht (22) durchgehend zwischen den zwei Schulterblöcken (6, 10) erstreckt, und wobei die mindestens eine Schicht (24) zwischen den zwei Schulterblöcken (6, 10) zumindest teilweise die äußere Kontaktfläche (30) bereitstellt, wobei sich die Gummimischung der ersten Schicht (22) von der Gummimischung der zweiten Schicht (24) unterscheidet,
wobei eine Basisschicht (50) bereitgestellt ist, die die radial innerste Schicht der Reifenlauffläche (2) bildet, **dadurch gekennzeichnet,**
**dass** zwischen der ersten Schicht (22) und der Basisschicht (50) eine weitere Schicht (170) angeordnet ist, wobei die weitere Schicht (170) aus einem Material besteht, das eine Steifigkeit aufweist, die zwischen der Steifigkeit der Basisschicht (50) und der Steifigkeit der ersten Schicht (22) liegt, und wobei die weitere Schicht (170) über die Reifenlauffläche (2) hinweg durchgehend ist und, auch im abgenutzten Zustand, nicht an die äußere Kontaktfläche (30) heranreicht.

2. Reifenlauffläche (2) nach Anspruch 1, wobei die äußere Kontaktfläche (30) zwischen den Schulterblöcken (6, 10) nur durch die zweite Schicht (24) bereitgestellt wird.

3. Reifenlauffläche (2) nach Anspruch 1, die mindestens einen Block oder eine Rippe (14) umfasst, die zwischen den äußeren Schulterblöcken (6, 10) angeordnet ist, in denen die äußere Kontaktfläche (30) zumindest teilweise durch die erste Schicht (22) bereitgestellt wird.

4. Reifenlauffläche (2) nach einem der Ansprüche 1 bis 3, die genau eine Rippe oder einen Block (14) umfasst, wobei die zweite Schicht (24) zwischen den zwei Schulterblöcken (6, 10) angeordnet ist.

5. Reifenlauffläche (2) nach einem der Ansprüche 1 bis 3, wobei mehrere Rippen oder Blöcke (62, 64) zwischen den Schulterblöcken (6, 10) angeordnet sind, wobei jeder Block (62, 64) die zweite Schicht (24) umfasst.

6. Reifenlauffläche (2) nach einem der vorhergehenden Ansprüche, die mindestens eine Rippe oder einen Block (180) mit zwei Schichten (174, 176), die in Radialrichtung angeordnet sind, umfasst.

7. Reifenlauffläche (2) nach einem der vorhergehenden Ansprüche, wobei zwischen den zwei Schulterblöcken (6, 10) mindestens ein Bereich (130, 132) bereitgestellt ist, in dem die erste Schicht (22) eine Kontaktfläche (30) bereitstellt.

8. Reifenlauffläche (2) nach Anspruch 7, wobei mindestens eine Rippe oder ein Block, die/der zwischen den zwei Schulterblöcken (6, 10) bereitgestellt ist, aus der ersten Schicht (22) hergestellt ist.

9. Reifenlauffläche (2) nach einem der vorhergehenden Ansprüche, wobei die zweite Schicht (24) in ihrem Bereich zwischen den zwei Schulterblöcken (6, 10) ein Dickenprofil mit mindestens einem Gradienten umfasst.

10. Reifenlauffläche (2) nach einem der vorhergehenden Ansprüche, die keine Umfangsrille umfasst.

11. Luftreifen mit einer Reifenlauffläche (2) nach einem der vorhergehenden Ansprüche.

## Revendications

1. Bande de roulement de pneumatique (2) comprenant deux blocs d'épaulement (6, 10), comprenant en outre une première couche (22) et comprenant en outre au moins une deuxième couche (24), dans laquelle ladite première couche (22) au moins partiellement dans les deux blocs d'épaulement (6, 10) fournit une surface de contact extérieure (30), et dans laquelle ladite première couche (22) s'étend de façon continue entre lesdits deux blocs d'épaulement (6, 10), et dans laquelle ladite au moins une deuxième couche (24) entre lesdits deux blocs d'épaulement (6, 10) fournit au moins partiellement ladite surface de contact extérieure (30), dans laquelle le composé de caoutchouc de la première couche (22) est différent du composé de caoutchouc de la deuxième couche (24),
dans laquelle il est prévu une couche de base (50) constituant la couche radialement la plus à l'intérieur de ladite bande de roulement (2), **caractérisée en ce**
**qu'**une couche supplémentaire (170) est disposée entre ladite première couche (22) et ladite couche de base (50), dans laquelle ladite couche supplémentaire (170) est constituée d'un matériau présentant une rigidité comprise entre la rigidité de la couche de base (50) et la rigidité de la première couche (22), et dans laquelle ladite couche supplémentaire (170) est continue à travers la bande de roulement (2) et n'atteint pas la surface de contact extérieure (30), même dans l'état usé.

2. Bande de roulement de pneumatique (2) selon la revendication 1, dans laquelle, entre lesdits blocs d'épaulement (6, 10), ladite surface de contact extérieure (30) est assurée uniquement par ladite deuxième couche (24).

3. Bande de roulement de pneumatique (2) selon la revendication 1, comprenant au moins un bloc ou une nervure (14) disposé(e) entre lesdits blocs d'épaulement (6, 10), dans lequel/laquelle ladite surface de contact extérieure (30) est assurée au moins partiellement par ladite première couche (22).

4. Bande de roulement de pneumatique (2) selon l'une des revendications 1 à 3, comprenant exactement une nervure ou un bloc (14) avec la deuxième couche (24) disposée entre lesdits deux blocs d'épaulement (6, 10).

5. Bande de roulement de pneumatique (2) selon l'une des revendications 1 à 3, dans laquelle une pluralité de nervures ou de blocs (62, 64) est disposée entre lesdits blocs d'épaulement (6, 10), dans laquelle chaque block (62, 64) comprend la deuxième couche (24).

6. Bande de roulement de pneumatique (2) selon l'une des revendications précédentes, comprenant au moins une nervure ou un bloc (180) avec deux couches (174, 176) disposées dans la direction radiale.

7. Bande de roulement de pneumatique (2) selon l'une des revendications précédentes, dans laquelle, entre lesdits deux blocs d'épaulement (6, 10), il est prévu au moins une région (130, 132) dans laquelle ladite première couche (22) fournit une surface de contact (30) .

8. Bande de roulement de pneumatique (2) selon la revendication 7, dans laquelle au moins une nervure ou un bloc disposé(e) entre lesdits deux blocs d'épaulement (6, 10) est constitué(e) de ladite première couche (22).

9. Bande de roulement de pneumatique (2) selon l'une des revendications précédentes, dans laquelle ladite deuxième couche (24) comprend un profil d'épaisseur avec au moins un gradient dans sa région entre lesdits deux blocs d'épaulement (6, 10).

10. Bande de roulement de pneumatique (2) selon l'une des revendications précédentes, sans rainure circonférentielle.

11. Pneumatique avec une bande de roulement de pneumatique (2) selon l'une des revendications précédentes.
